# EUROPÄISCHE PATENTSCHRIFT

(11) **EP 4 226 760 B1**
(45) Veröffentlichungstag und Bekanntmachung des Hinweises auf die Patenterteilung: **02.10.2024**
(21) Anmeldenummer: 23150833.4
(22) Anmeldetag: 10.01.2023
(51) Int. Cl.: A01F 15/10, A01D 90/04

(54) **ERNTEMASCHINE SOWIE VERFAHREN ZU DEREN HERSTELLUNG**
HARVESTING MACHINE AND METHOD FOR THE PRODUCTION THEREOF
MOISSONNEUSE ET SON PROCÉDÉ DE FABRICATION

(30) Priorität: 15.02.2022 DE 102022103539
(43) Veröffentlichungstag der Anmeldung: 16.08.2023
(73) Patentinhaber: Pöttinger Landtechnik GmbH, 4710 Grieskirchen (AT)
(72) Erfinder: REITER, Josef, 4710 Grieskirchen (AT); WEISSENBÖCK, Thomas, 4710 Grieskirchen (AT); LINDINGER, Lukas, 4710 Grieskirchen (AT); PFEIFFER, Stefan, 4710 Grieskirchen (AT)
(74) Vertreter: Thoma, Michael

(56) Entgegenhaltungen:
- EP-B1- 1 121 012
- EP-B1- 1 389 415
- DE-A1- 102018 123 990
- DE-A1- 3 617 003
- DE-B4- 102013 007 304
- US-A- 5 974 776
- US-A1- 2014 096 692
- US-A1- 2022 000 026
- US-B1- 6 912 835

## Beschreibung

Die vorliegende Erfindung betrifft eine Erntemaschine, insbesondere in Form eines Ladewagens oder einer Ballenpresse, mit einem Schneidwerk, das an einem Messerbalken angeordnete Messer umfasst, die in ihrer Schneidstellung in einen Förderkanal für das Erntegut hineinragen, wobei die Messer am Messerbalken zum Ausweichen vor Hindernissen beweglich gelagert und jeweils von einem Rückhalter in der Schneidstellung zurückgehalten sind, wobei der genannte Rückhalter jeweils eine Haltegabel sowie ein Messereingriffsstück, das an der Haltegabel durch eine Bolzenverbindung gelagert ist, umfasst. Die Erfindung betrifft ferner auch ein Verfahren zum Herstellen einer solchen Erntemaschine, bei dem das Messereingriffsstück des Rückhalters an dessen Haltegabel durch eine Bolzenverbindung befestigt wird.

Landwirtschaftliche Erntemaschinen wie Ballenpressen oder Ladewagen besitzen regelmäßig ein der Belade- bzw. Aufnahmevorrichtung zugeordnetes Schneidwerk mit mehr oder minder vielen Messern, die in einen Förderkanal hineinragen, um das von der Aufnahmevorrichtung vom Boden aufgenommene Erntegut auf seinem Weg in die Ballenformkammer bzw. den Laderaum zu zerschneiden. Üblicherweise besitzen die Aufnahmevorrichtungen solcher landwirtschaftlicher Erntemaschinen einen Aufsammelrotor in Form beispielsweise einer Stachelwalze, um das Erntegut vom Boden aufzusammeln, oder allgemein ein geeignetes Förderorgan, das Futter vom Boden wegbewegt, beispielsweise in Form eines Förderbands, eines Saugers oder dergleichen, sowie einen dem Aufnahmerotor nachgeordneten Förderrotor bzw. ein zweites Förderorgan, der/das der Stachelwalze bzw. dem ersten Förderorgan nachgeordnet ist und das übernommene Erntegut weiter in die Ballenformkammer bzw. den Laderaum fördert.

Um beim Auftreffen vom im Erntegut befindlichen Fremdkörpern wie Steinen größere Beschädigungen an den Messern zu vermeiden, werden die Messer an dem Messerträger, der sie in den Förderkanal hineinragend hält, beweglich gelagert, sodass die Messer bei Auftreffen eines Fremdkörpers nachgeben bzw. zurückgeklappt werden können, um dem Fremdkörper auszuweichen. Um das Messer bei normalem Schneiddruck jedoch in seiner Schneidposition zu halten und/oder nach einem Ausweichen zurück in die Schneidposition zu verbringen, ist den Messern eine Rückhaltevorrichtung zugeordnet, die die Schneidmesser in der Schneidposition hält und nur bei übergroßen Belastungen bzw. beim Auftreffen von Hindernissen freigibt. Die Rückhaltevorrichtung kann dabei vorteilhafterweise individuelle Rückhalter für die einzelnen Messer aufweisen, um eine Einzelauslösung einzelner Messer bei Auftreffen eines Hindernisses zu ermöglichen, während nicht auf das Hindernis treffende Messer in der Schneidstellung verbleiben, wobei ggf. auch zwei benachbarte Messer oder allgemein Gruppen benachbarter Messer an einem Rückhalter zusammengefasst sein und gruppenweise ausweichen können. Ein präziseres Auslösen mit geringeren Schnittverlusten kann jedoch mit Einzelrückhaltern, die jeweils ein einzelnes Messer zurückhalten, erreicht werden kann.

Für bestimmte Ernteformen wie beispielsweise bei der Silage-Ernte ist eine kurze Schnittlänge und damit ein kleiner Messerabstand von großer Bedeutung. Aufgrund des beengten Bauraums bei beweglicher Messerlagerung mit zugeordneten Rückhaltern ist ein beliebig kurzer Schnittabstand jedoch mit bisherigen Konstruktionen der Messersicherung nicht umsetzbar, insbesondere wenn jedes Messer einzeln gegen Fremdkörper gesichert ist und jeweils seinen "eigenen" Rückhalter besitzt.

Derartige Rückhaltevorrichtungen bzw. Messersicherungen besitzen üblicherweise eine Querbolzenverbindung zur Befestigung des Messereingriffstücks, mit dem der Rückhalter auf dem Messerrücken sitzt bzw. das Messer kontaktiert, um dieses in der Schneidstellung zu halten und ggf. nach einem Ausweichen wieder zurück in die Schneidstellung zu treiben. Das genannte Messereingriffsstück ist dabei oft eine Rolle oder ein Gleitstück, das beim Auslösen des Messers auf dem Messerrücken abrollt bzw. abgleitet und durch die Querbolzenverbindung drehbar oder auch drehfest an einer Haltegabel befestigt ist, wobei die genannte Haltegabel oft schwenkbar und/oder translatorisch wegziehbar gelagert und durch eine Federeinrichtung vorgespannt sein kann.

Bei der üblicherweise bestimmungsgemäßen, fluchtenden Aufreihung der Messer entlang der Längsachse des Messerbalkens fluchten bei identischer Ausbildung der Messerrücken die genannten Bolzenverbindungen miteinander und begrenzen die Verkürzung des Messerabstands, da die Querbolzenverbindung in üblicherweise Weise den dicksten bzw. den breitesten Teil des Rückhalters bildet. Um den im Betrieb teilweise beträchtlichen Belastungen standhalten zu können, müssen die Querbolzen axial ausreichend stabil und verlässlich gesichert sein, was üblicherweise dadurch erreicht wird, dass die genannten Querbolzen rechts und links über das Messereingriffsteil und die zugehörige Haltegabel überstehen und durch einen durchgesteckten Sicherungsstift gesichert werden. Dabei benötigt der Querbolzen um die Bohrung für den Sicherungsstift herum ausreichend Fleisch, sodass der Querbolzen insgesamt rechts und links ein gutes Stück übersteht.

Da die Messer und die darauf sitzenden Rückhalter bei den im Betrieb oft hohen Schneidkräften auch Verwindungen quer zur Schnittrichtung zeigen können, andererseits aber die Rückhalter trotzdem nicht aneinander anstehen dürfen, um den Auslösevorgang beim Auftreffen eines Hindernisses nicht zu behindern, kann der Messerabstand und damit die Schnittlänge nicht beliebig verkürzt werden. Die Rückhalter benötigen rechts und links ein Stück weit Bauraum bzw. ausreichend "Luft" zum benachbarten Rückhalter, um eine verlässliche Funktion sicherstellen zu können. Dabei ist auch zu berücksichtigen, dass die Querbolzen auch ein gewisses Axialspiel benötigen, um die Sicherungsstifte vernünftig montieren zu können.

Ein Schneidwerk einer Erntemaschine, dessen Messer einzeln durch elastisch ausgebildete bzw. elastisch gelagerte Rückhalter in der Schneidstellung gehalten sind, zeigt beispielsweise die Schrift DE 10 2013 007 304 B1, wobei die Rückhalter als Messereingriffsstück jeweils eine von einer Querbolzenverbindung drehbar gelagerte Rückhalterolle aufweisen, die auf dem Rücken des jeweiligen Messers abrollen kann.

Weitere Schneidwerke mit Messern, die von beweglich ausgebildeten Rückhaltern in der Schneidstellung gehalten werden und ein Ausweichen bei Hindernissen erlauben, sind beispielsweise aus den Schriften EP 13 89 415 B1 oder DE 10 2013 010 669 A1 bekannt.

Der vorliegenden Erfindung liegt die Aufgabe zugrunde, eine verbesserte landwirtschaftliche Erntemaschine der genannten Art sowie ein verbessertes Verfahren zu deren Herstellung zu schaffen, die Nachteile des Standes der Technik vermeiden und letzteren in vorteilhafter Weise weiterbilden. Insbesondere soll ein verlässliches Rückhalten der Messer in der Schneidstellung erzielt werden, das eine weitere Verkürzung der Schnittlänge durch näheres Zusammenrücken der Messer gestattet, ohne ein präzises Auslösen beim Auftreffen von Hindernissen zu beeinträchtigen oder gar bei bestimmungsgemäßen Schnittkräften Fehlauslösungen zu haben.

Erfindungsgemäß wird die genannte Aufgabe durch eine landwirtschaftliche Erntemaschine gemäß Anspruch 1 sowie ein Verfahren zu deren Herstellung gemäß Anspruch 14 gelöst. Bevorzugte Ausgestaltungen der Erfindung sind Gegenstand der abhängigen Ansprüche.

Es wird also vorgeschlagen, die Querbolzenverbindung zur Befestigung bzw. Lagerung des Messereingriffsstücks an der Haltegabel des Rückhalters mehrteilig auszubilden und die mehreren Querbolzenteile geschickt aneinander zu befestigen, sodass der seitliche Überstand der Querbolzenverbindung reduziert werden kann. Erfindungsgemäß wird vorgeschlagen, dass die Querbolzenverbindung einen Querbolzen und eine Bolzenhülse umfasst, die ineinander sitzen und aneinander befestigt sind, und an gegenüberliegenden Enden der Querbolzenverbindung verbreiterte, integral einstückig angeformte Bolzenköpfe zur Axialsicherung der Bolzenverbindung besitzen. Durch die integral angeformten, insbesondere materialhomogen mit dem Bolzenkorpus ausgebildeten Bolzenköpfe an den Enden der Querbolzenverbindung kann deren axialer Überstand deutlich reduziert werden, da kein zusätzliches Fleisch für Aufnahmebohrungen für Sicherungsstifte benötigt wird, während andererseits durch die mehrteilige Ausbildung trotzdem eine einfache Montage erzielt werden kann, insbesondere dadurch, dass der Querbolzen einerseits und die Bolzenhülse andererseits von verschiedenen Seiten her in das Messereingriffsstück und die Haltegabel eingesetzt und aneinander befestigt werden, sodass die endseitigen Bolzenköpfe, die als Axialsicherung dienen, nicht mehr auseinanderziehbar sind. Die Bolzenhülse und der Querbolzen werden in der ineinander sitzenden Verbindungs- und Funktionsstellung durch Befestigungsmittel derart aneinander gehalten, dass sie axial, d.h. in Querbolzen-Längsrichtung aneinander gesichert sind und nicht auseinandergezogen werden könne. Durch die beiderseits vorgesehenen, bundförmigen Bolzenköpfe, die größer konturiert sind als die Durchgangsöffnungen von Haltegabel und/oder Messereingriffsteil und sozusagen als Anschlag dienen, können Bolzenhülse und Querbolzen somit nicht mehr aus der Haltegabel und dem Messereingriffsteil herausrutschen.

In Weiterbildung der Erfindung kann die genannte Bolzenhülse eine Bundbuchse mit einem Durchgangsloch bilden, durch das der Querbolzen hindurchgesteckt werden kann. Um die Bolzenhülse und den durchgesteckten Querbolzen aneinander zu befestigen bzw. den Querbolzen gegen axiales Herausziehen aus der Bundbuchse zu sichern, kann der Querbolzen mit der Bundbuchse verpresst werden.

Insbesondere kann der Querbolzen plastisch verformt werden, um an der Bolzenhülse zu halten, wobei vorzugsweise ein aus dem Durchgangsloch herausstehender Endabschnitt bzw. der durch das Durchgangsloch hindurchgesteckte Endabschnitt des Querbolzens durch plastische Verformung aufgeweitet werden kann. Vorteilhafterweise kann der durch das Durchgangsloch durchgesteckte Endabschnitt des Querbolzens durch plastische Verformung soweit im Durchmesser bzw. in seiner Umrisskontur vergrößert werden, dass der plastisch verformte Endabschnitt nicht mehr rückwärts durch das Durchgangsloch hindurch passt.

Insbesondere kann der durch das Durchgangsloch der Bundbuchse hindurchgesteckte Querbolzen an seinem Endabschnitt nach Art eines Niets durch plastisches Umformen mit einem - grob gesprochen - pilzkopfförmigen Sicherungs- bzw. Haltekopf versehen werden, der sich axial an einer stirnseitigen Endkontur der Bolzenhülse abstützt und somit ein rückwärts gerichtetes Herausziehen des Querbolzens aus der Bolzenhülse verhindert.

Der Querbolzen besitzt somit nach dem Umformen im eingesteckten Zustand, das heißt in der Bolzenhülse sitzend, an einem Ende einen bundförmigen Kopfabschnitt, mit dem sich der Querbolzen an der Haltegabel und/oder dem daran gelagerten Messereingriffsstück axial abstützt, und am anderen Ende den plastisch verformten Sicherungskopf, mit dem sich der Querbolzen an der Bundhülse axial abstützt. Die Bundhülse selbst kann an dem Endabschnitt, an dem der Querbolzen seine plastisch verformte Aufweitung besitzt, selbst einen Bund oder einen bundförmigen Kopf besitzen, mit der sich die Bolzenhülse an der Haltegabel und/oder dem daran befestigten Messereingriffsstück axial abstützt.

Um einerseits eine verschleißfeste Lagerung des Messereingriffsstücks, das mit oft hohen Kräften belastet wird, zu erreichen, andererseits aber die plastische Verformung zum Befestigen bzw. Verpressen der Bolzenverbindungsteile aneinander zu vereinfachen, können die Bolzenhülse einerseits und der Querbolzen andererseits aus unterschiedlich harten und/oder unterschiedlich fließfesten Materialien bzw. aus unterschiedlich behandelten Materialien bestehen. Vorteilhafterweise können beide Teile, das heißt Bolzenhülse und Querbolzen aus Metall, insbesondere Stahl bestehen, wobei die Bolzenhülse vorteilhafterweise härter ausgebildet und/oder eine härtere Oberfläche besitzen kann als der Querbolzen. Insbesondere kann die Bolzenhülse eine gehärtete Oberfläche besitzen oder insgesamt gehärtet sein, um an der Kontaktfläche zum Messereingriffsstück und/oder zum Querbolzen, das heißt an der Außenmantelfläche oder der Innenmantelfläche gehärtet sein, beispielsweise durch ein geeignetes Oberflächen-Härteverfahren wie Nitrieren.

Im Gegensatz zu der gehärteten Bolzenhülse kann der Querbolzen aus einem weicheren Stahl bestehen und/oder ungehärtet bleiben und/oder aus einem weicheren Metall bestehen, um das Verpressen bzw. das Ausbilden des plastisch verformten Sicherungskopfes zu erleichtern. Je nach Belastungsstärke des Rückhalters kann der Querbolzen ggf. auch aus einem anderen Metall als Stahl geformt sein, welches ausreichend weich ist, um das Vernieten des Bolzenendes zu erleichtern. Beispielsweise kann ein Kupfer oder Bronzebolzen in Betracht kommen, wobei vorteilhafterweise aber der Querbolzen aus einem ungehärteten und somit weich gebliebenen Stahl gebildet sein kann.

Alternativ oder zusätzlich zu einem plastischen Verformen des Querbolzenendes kann der Querbolzen mit der Bolzenhülse aber auch in anderer Weise formschlüssig verbunden sein, wobei insbesondere eine Verschraubung oder eine Verdrehsicherung nach Art eines Bajonettverschlusses vorgesehen sein kann, durch die der Querbolzen und die Bolzenhülse durch Verdrehen zueinander axial gesichert werden können.

Beispielsweise kann an der Bolzenhülse ein Innengewinde und an dem Querbolzen ein Außengewinde vorgesehen sein, sodass der Querbolzen in die Bolzenhülse eingeschraubt werden kann, wobei eine zusätzliche Sicherung wie beispielsweise eine Verklebung oder auch ein plastisches Verformen des durchgeschraubten Endes des Querbolzens nach Art eines Nietkopfes in Betracht kommt. Grundsätzlich kann bei einer Einschraubbarkeit des Querbolzens in die Bolzenhülse letztere aber auch anstelle eines Durchgangslochs nur ein Sackloch aufweisen, in das der Querbolzen eingeschraubt werden kann.

Um minimale Messerabstände und somit sehr kurze Schnittlängen zu ermöglichen, kann die Querbolzenverbindung mit ihren Endabschnitten bündig und/oder versenkt in der Haltegabel sitzen, sodass die Querbolzenverbindung endseitig nicht über die Haltegabel des Rückhalters axial vorsteht. Vorteilhafterweise können beide Endabschnitte der Querbolzenverbindung bündig und/oder versenkt in die Kontur der Haltegabel eingelassen sein, wobei die Haltegabel hierzu beispielsweise eine stufenförmige oder absatzartige Querbolzenausnehmung besitzen kann, in die der endseitige Bund bzw. Bolzenkopf zumindest teilweise versenkt aufgenommen werden kann, wobei der im Durchmesser verjüngte Treppenabsatz bzw. die verjüngte Ringstufe der Durchgangsausnehmung den Bolzenkopf bzw. -bund gegen axiales Durchrutschen sichern kann.

Alternativ oder zusätzlich zu einer stufenförmigen Aufweitung des Durchgangslochs in der Haltegabel kann die genannte Haltegabel auch eine kegelige Senkausnehmung besitzen, in die ein dann vorzugsweise ebenfalls kegeliger Abschnitt des Bolzenkopfs versenkt werden kann.

Je nach Belastungssituation, beispielsweise bei sehr großen Schneidwerken mit hohen Belastungen, und/oder je nach Schnittlängenwunsch kann es auch ausreichend sein, wenn nur einer der Endabschnitte der Querbolzenverbindung zumindest teilweise versenkt in der Kontur der Haltegabel und/oder bündig dazu montiert werden kann.

Die Querbolzenverbindung kann in Weiterbildung der Erfindung einen Achsbolzen eines Drehlagers bilden und/oder das Messereingriffsstück drehbar lagern und die Rotationsachse für das Messereingriffsstück definieren. Das genannte Messereingriffsstück kann vorteilhafterweise eine Rolle bilden, die beim Auslösen des Messers beim Auftreffen eines Hindernisses auf dem Messerrücken abrollen kann. Ein solcher Wälzeingriff zwischen Messereingriffsstück und Messerrücken und die hierfür vorgesehene drehbare Lagerung des Messereingriffsstücks kann ein definiertes Auslösen bei einer definierten Auslösekraft ohne einen Losreiß-Piek ermöglichen bzw. dabei behilflich sein, wobei aber grundsätzlich auch ein Gleiteingriff zwischen Messereingriffsstück und Messerrücken möglich und in diesem Fall eine drehfeste Lagerung des Messereingriffsstücks möglich wäre.

Unabhängig von einer drehbaren oder drehfesten Lagerung des Messereingriffsstücks kann das genannte Messereingriffsstück nach Art einer Scheibe ausgebildet sein und/oder außenumfangsseitig eine Führungsnut besitzen, die beim Abwälzen oder Abgleiten des Messereingriffsstücks auf dem Messerrücken das Messereingriffsstück führt und gegen Herabrutschen vom Messerrücken sichert.

Die Erfindung wird nachfolgend anhand bevorzugter Ausführungsbeispiele und zugehörigen Zeichnungen näher erläutert. In den Zeichnungen zeigen.

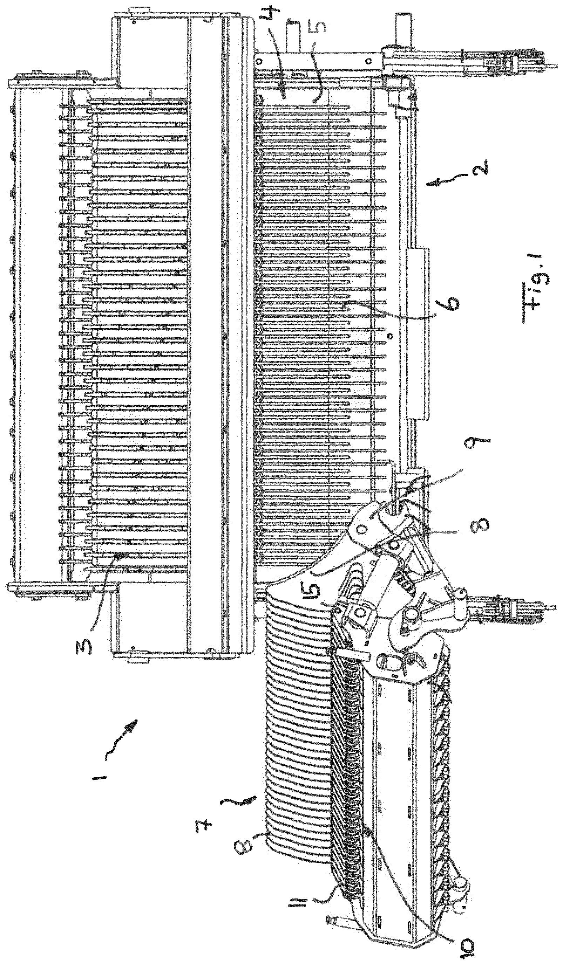

- Fig. 1:: eine schematische Darstellung der Aufnahmevorrichtung einer Erntemaschine und des zugehörigen Schneidwerks, wobei der Förderkanal und der daran angeordnete Förderrotor in einer Rückansicht auf die Förderkanalwandung und das Schneidwerk in einer ausgeschwenkten Reparaturbzw. Wartungsstellung perspektivisch gezeigt sind,

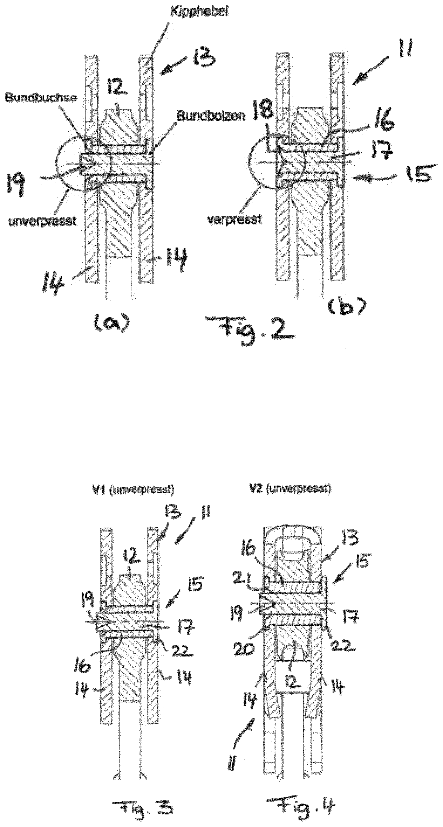

- Fig. 2:: eine Schnittansicht eines Rückhalters für eines der Messer des Schneidwerks aus Fig. 1, die die Haltegabel des Rückhalters und das durch eine Querbolzenverbindung daran befestigte Messereingriffsstück zeigt, wobei die Teilansicht a die Querbolzenverbindung in einer noch unverpressten Montagestellung und die Teilansicht b die Querbolzenverbindung im verpressten Funktionszustand zeigt,
- Fig. 3:: eine Schnittansicht des Rückhalters mit noch unverpressten Querbolzen ähnlich Fig. 2a, die das bündige Versenken der Bolzenköpfe an der Haltegabelkontur zeigt,
- Fig. 4:: eine Schnittansicht eines Rückhalters nach einer weiteren Ausführung der Erfindung in einer Darstellung ähnlich Fig. 3 mit noch unverpresstem Querbolzen, wobei einer der Endabschnitt der Querbolzenverbindung mit dem daran vorgesehenen Bolzenkopf über die Kontur der Haltegabel übersteht und die Querbolzenverbindung nur einseitig bündig mit der Haltegabel ist, und

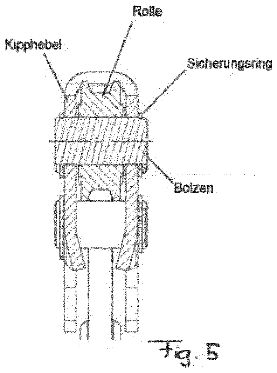

- Fig. 5:: eine Schnittansicht eines Rückhalters nach dem Stand der Technik, dessen Querbolzen beiderseits durch Sicherungsstifte bzw. Sicherungsringe an den überstehenden Bolzenenden gesichert ist.

Die in Figur 1 ausschnittsweise gezeigte Erntemaschine 1 kann in Form eines Ladewagens oder einer Ballenpresse ausgebildet sein, der/die mit einem Fahrwerk auf dem Boden läuft und beispielsweise mittels einer Deichsel an einem Schlepper angehängt sein kann. Mittels der in Figur 1 gezeigten Aufnahmevorrichtung 2 kann die Erntemaschine Erntegut wie Gras, Heu oder Stroh vom Boden aufnehmen und in den Laderaum des Ladewagens oder die Ballenformkammer der Ballenpresse fördern. Wie eingangs erwähnt kann die Aufnahmevorrichtung 2 eine Pickup mit einer rotierenden Stachelwalze umfassen, die das vom Boden aufgenommene Erntegut an einen Förderrotor 3 übergibt, der das Erntegut durch einen Förderkanal 4 hindurch in den Laderaum bzw. die Ballenformkammer treibt, wobei Figur 1 die Rückwand 5 des Förderkanals 4 zeigt, in welchem der Förderrotor 3 umläuft.

In der genannten Rückwand 5 sind schlitzförmige Ausnehmungen 6 ausgebildet, durch die hindurch die Messer 8 des Schneidwerks 7 in den Förderkanal 4 hineinragen können, um dort im Zusammenspiel mit dem Förderrotor 3 das durch den Förderkanal 4 geförderte Erntegut zu zerschneiden.

Das Schneidwerk 7 umfasst dabei eine Vielzahl an Messern 8, die nebeneinander bzw. miteinander fluchtend auf einem Messerbalken 9 aufgereiht sind, an dem die Messer 8 grundsätzlich schwenkbar gelagert sind.

Eine Rückhaltevorrichtung 10 verhindert jedoch im normalen Schneidbetrieb das Wegschwenken der Messer 8 und hält letzteren in einer vorbestimmten Schneidstellung am Messerbalken 9. Andererseits erlaubt die Rückhaltevorrichtung 10 das Wegtauchen bzw. Wegschwenken der Messer 8, wenn ein Hindernis auftrifft und übermäßige Kräfte auf die Messer 8 einwirken.

Wie Figur 1 zeigt, umfasst die Rückhaltevorrichtung 10 dabei für jedes Messer 8 einen separaten Rückhalter 11, der "sein" jeweiliges Messer 8 gegen Verschwenken am Messerbalken 9 abstützt und in der Schneidstellung hält.

Die Rückhalter 11 sind dabei nachgiebig und/oder elastisch ausgebildet bzw. gelagert, um ein Wegbewegen der Messer 8 beim Auftreffen von Hindernissen zu gestatten, wobei die Rückhalter 11 unabhängig voneinander agieren können und ein individuelles Auslösen des jeweiligen Messers gestatten.

Die Rückhalter 11 umfassen dabei jeweils ein Messereingriffsstück 12, das mit dem Messerrücken des jeweiligen Messers in Eingriff steht und im Falle des Auslösens des Messers darauf abrollen kann bzw. daran entlanggleiten kann.

Wie die Figuren 2 bis 4 zeigen, kann das Messereingriffsstück 12 als Rolle ausgebildet und drehbar an einer Haltegabel 13 des jeweiligen Rückhalters 11 drehbar gelagert sein.

Die genannte Haltegabel 13 des jeweiligen Rückhalters 11 kann dabei zwei voneinander beabstandete Gabelarme 14 umfassen, zwischen denen das Messereingriffsstück 12 aufgenommen ist und an denen das Messereingriffsstück 12 durch eine Querbolzenverbindung 15 gelagert, insbesondere drehbar gelagert ist.

Die Querbolzenverbindung 15 erstreckt sich dabei durch die beiden Gabelarme 14 der Haltegabel 13 und durch das dazwischen aufgenommene Messereingriffsstück 12 hindurch. Hierfür können die Gabelarme 14 und das Messereingriffsstück 12 miteinander fluchtende Durchgangsausnehmungen aufweisen, die an die Kontur der Querbolzenverbindung 15 angepasst sein können.

Wie die Figuren 2 bis 4 zeigen, ist die Querbolzenverbindung 15 mehrteilig ausgebildet und umfasst mehrere Querbolzenteile, die zusammen die Lagerung für das Messereingriffsstück 12 an der Haltegabel 13 in Form der Querbolzenverbindung 15 bilden.

Die Querbolzenverbindung 15 umfasst dabei einerseits eine Bolzenhülse 16 und andererseits einen Querbolzen 17, der in der Bolzenhülse 16 sitzt und daran formschlüssig gehalten ist.

Wie die Figuren 2 bis 4 zeigen, kann die Bolzenhülse 16 ein Durchgangsloch beispielsweise in Form einer Durchgangsbohrung mit kreisrundem, gleichbleibendem Querschnitt aufweisen, durch die der Querbolzen 17 hindurchgesteckt werden kann, sodass der hindurchgesteckte Endabschnitt des Querbolzens 17 einen - bei Betrachtung des Durchsteckvorgangs - gegenüberliegenden Endabschnitt erreicht und/oder zunächst ein Stück weit darüber hinaus vorsteht, vgl. Figur 2a und Figur 3 sowie Figur 4.

Um den Querbolzen 17 in der Bolzenhülse 16 axial zu sichern und ein Herausrutschen zu verhindern, kann der durchgesteckte Endabschnitt des Querbolzens 17 plastisch verformt werden, um einen im Durchmesser bzw. der Umrisskontur vergrößerten Sicherungskopf 18 auszubilden. Der genannte Sicherungskopf 18, der durch plastisches Verformen des Bolzenendabschnitts entsteht, ist von seinen Abmessungen zu groß, um durch die Durchgangsausnehmung der Bolzenhülse 16 hindurchzupassen, sodass der Querbolzen 17 nicht mehr rückwärts aus der Bolzenhülse 16 herausgezogen werden kann.

Um das plastische Aufweiten des Bolzenendes zu erleichtern, kann der Querbolzen 17 an seinem durchsteckbaren Endabschnitt, der plastisch verformt werden soll, eine Spreiz- oder Senkausnehmung 19 besitzen, die in der axialen Stirnseite des Querbolzens 17 ausgebildet sein und beispielsweise kegelig ausgebildet sein kann, vgl. Figur 3. Durch Eindrücken eines Werkzeugs in die genannte Spreizausnehmung 19 kann der Endabschnitt des Querbolzens 17 in der gewünschten Weise nietförmig aufgeweitet und zu einem Sicherungskopf umgeformt werden, der sich dann axial am stirnseitigen Ende der Bolzenhülse 16 abstützt.

Die Bolzenhülse 16 kann vorteilhafterweise an ihrem Endabschnitt, der mit dem Querbolzen 16 verpresst werden soll, einen bundförmigen Hülsenkopf 20 besitzen, der im Durchmesser bzw. der Außenkontur größer ist als die Durchgangsausnehmung durch die Haltegabel 17 und das Messereingriffsstück 12, sodass die Bolzenhülse 16 mit ihrem Hülsenkopf 20 axial an der Haltegabel 13 anstehen kann.

Die Bolzenhülse 16 kann im Bereich ihres Hülsenkopfes 20 innenmantelflächenseitig eine Verpressaufweitung 21 besitzen, in die das Material des Endabschnitts des Querbolzens 17 bei dessen plastischer Verformung hineinfließen kann, vgl. vergleichend Figur 2a und Figur 2b. Die genannte endseitige Verpressaufweitung 21 der Bolzenhülse 16 kann beispielsweise eine kegelige Verbreiterung bzw. Aufweitung des Endabschnitts des Durchgangslochs durch die Bolzenhülse 16 hindurch sein.

Unabhängig von der konkreten Konturierung kann die Verpressaufweitung 21 dazu ausgebildet sein, den verpressten bzw. plastisch umgeformten Sicherungskopf 18 der Querhülse 17 bündig aufzunehmen, sodass letzterer nicht stirnseitig über die Bolzenhülse 16 vorsteht, vgl. Figur 2b.

Der Querbolzen 17 besitzt an seinem dem plastisch verformten Sicherungskopf 18 gegenüberliegenden Ende einen bundförmigen Bolzenkopf 22, der die Querbolzenverbindung 15 gegen axiales Herausziehen zur verpressten Seite hin sichert und einen Anschlag bildet, der an der Haltegabel 13 ansteht.

Die Querbolzenverbindung 15 besitzt somit an gegenüberliegenden Endabschnitten zwei vorzugsweise bundförmige, insbesondere integral angeformte, mit dem restlichen Korpus materialhomogen ausgebildete Hülsen- und Bolzenköpfe 20 und 22, zwischen denen die Haltegabel 13 und das dazwischenliegende Messereingriffsstück 12 sitzen, wobei die gegenüberliegenden Hülsen- und Bolzenköpfe 20, 22 Anschläge bilden, die die Querbolzenverbindung gegen axiales Herausziehen sichern. Durch das Verpressen von Querbolzen 17 und Bolzenhülse 16 gegeneinander ist zudem verhindert, dass die mehreren Teile der Querbolzenverbindung voneinander gelöst werden.

Wie Figur 2b zeigt, kann die Querbolzenverbindung 15 vorteilhafterweise mit beiden Endabschnitten bündig in die Kontur der Haltegabel 13 versenkt angeordnet bzw. aufgenommen sein. Hierzu können die Ausnehmungen in den Gabelarmen 14, durch die die Querbolzenverbindung 15 hindurchgesteckt wird, beispielsweise stufenförmig oder auch kegelig konturiert sein, um einerseits ein bündiges Versenken der Hülsen- und Bolzenköpfe 20, 22 zu ermöglichen, letztere aber am Durchrutschen zu hindern.

Gegebenenfalls kann es auch ausreichend sein, nur einen der Hülsen- oder Bolzenköpfe 20, 22 zumindest teilweise in die Kontur der Gabelarme 14 versenkt oder bündig zu montieren, vgl. Figur 4. Beispielsweise kann der Hülsenkopf 20 bündig versenkt in einem der Gabelarme 14 montiert sein, wobei auch der Sicherungskopf 18 in dem Hülsenkopf 20 versenkt oder dazu bündig umgeformt sein kann, während andererseits der Bolzenkopf 22 am gegenüberliegenden Ende der Querbolzenverbindung 15 mit Überstand auf dem gegenüberliegenden Gabelarm 14 sitzen kann, vgl. Figur 4.

In beiden Fällen gemäß Figur 3 und Figur 4 ist dennoch eine schmäler bauende Ausführung des Rückhalters 11 im Vergleich zu vorbekannten Lösungen gegeben, wie sie beispielsweise Figur 5 zeigt. Bei der vorbekannten Ausbildung des Rückhalters gemäß Figur 5 steht der Querbolzen beidseits über die Haltegabel 13 über, um an dem überstehenden bzw. herausstehenden Endabschnitt jeweils einen Sicherungsring anbringen zu können, der ein Herausrutschen des Querbolzens verhindert.

## Patentansprüche

1. Erntemaschine, insbesondere in Form eines Ladewagens oder einer Ballenpresse, mit einem Schneidwerk (7), das an einem Messerbalken (9) angeordnete Messer (8) umfasst, die in ihrer Schneidstellung in einen Förderkanal (4) für das Erntegut hineinragen, wobei die Messer (8) am Messerbalken (9) zum Ausweichen bei Hindernissen beweglich gelagert und jeweils von einem Rückhalter (11) in der Schneidstellung zurückgehalten sind, wobei der genannte Rückhalter (11) jeweils eine Haltegabel (13) sowie ein Messereingriffsstück (12), das an der Haltegabel (13) durch eine Querbolzenverbindung (15) gelagert ist, umfasst, **dadurch gekennzeichnet, dass** die Querbolzenverbindung (15) einen Querbolzen (17) und eine Bolzenhülse (16) umfasst, die ineinander sitzend aneinander befestigt sind und an gegenüberliegenden Enden der Querbolzenverbindung (15) verbreiterte, integral einstückig angeformte Hülsen- und Bolzenköpfe (20, 22) zur Axialsicherung der Querbolzenverbindung (15) besitzen.

2. Erntemaschine nach dem vorhergehenden Anspruch, wobei die Bolzenhülse (15) eine Bundhülse mit Durchgangsloch bildet, durch das der Querbolzen (16) hindurchgesteckt ist, wobei der Querbolzen im hindurchgesteckten Zustand mit der Bundhülse verpresst ist.

3. Erntemaschine nach dem vorhergehenden Anspruch, wobei der Querbolzen (17) einerseits einen bundförmigen Bolzenkopf (22) zum Anstehen an der Haltegabel und/oder an dem Messereingriffsstück (12) und andererseits einen plastisch verformten Sicherungskopf (18) zum Anstehen an der Bolzenhülse (16) aufweist, sodass die Bolzenhülse (16) auf dem Querbolzen (17) sitzend zwischen dem Sicherungskopf (18) und dem Bolzenkopf (22) des Querbolzens (17) axial gesichert ist.

4. Erntemaschine nach einem der vorhergehenden Ansprüche, wobei die Bolzenhülse (16) an ihrem Endabschnitt, an dem die Bolzenhülse (16) einen bundförmigen Hülsenkopf (20) aufweist, eine Verpressaufweitung (21) besitzt, die ein durch die Bolzenhülse (16) hindurchgehendes Durchgangsloch zum Hülsenkopf (20) hin aufweitet und/oder verbreitert.

5. Erntemaschine nach dem vorhergehenden Anspruch, wobei der Querbolzen (17) mit seinem plastisch verformten Sicherungskopf (18) sich in der genannten Verpressaufweitung (21) der Bolzenhülse (16) aufweitet und der Sicherungskopf (18) zumindest teilweise in der genannten Verpressaufweitung (21) versenkt aufgenommen ist.

6. Erntemaschine nach dem vorhergehenden Anspruch, wobei der plastisch verformte Sicherungskopf (18) in der Verpressaufweitung (21) der Bolzenhülse (16) bündig versenkt oder überstandsfrei versenkt aufgenommen ist.

7. Erntemaschine nach einem der vorhergehenden Ansprüche, wobei die Bolzenhülse (16) einerseits und der Querbolzen (17) andererseits aus unterschiedlich harten Materialien geformt sind und/oder eine unterschiedliche Oberflächenhärte besitzen.

8. Erntemaschine nach dem vorhergehenden Anspruch, wobei die Bolzenhülse (16) zumindest außenumfangsseitig gehärtet ausgebildet ist und eine größere Härte als der Querbolzen (16) besitzt, und der genannte Querbolzen (17) ungehärtet ausgebildet ist.

9. Erntemaschine nach einem der vorhergehenden Ansprüche, wobei zumindest einer der Hülsen- und Bolzenköpfe (20, 22) der Bolzenhülse (16) und des Querbolzens (17) bündig versenkt und/oder überstandsfrei versenkt in der Haltegabel (13) des Rückhalters (11) montiert ist.

10. Erntemaschine nach dem vorhergehenden Anspruch, wobei die Querbolzenverbindung (15) beidseits überstandsfrei versenkt in der Haltegabel (13) montiert ist.

11. Erntemaschine nach einem der vorhergehenden Ansprüche, wobei die Haltegabel (13) des Rückhalters (11) eine sich zu einer Außenseite hin verbreiternde Durchgangsausnehmung zum Aufnehmen der Querbolzenverbindung (15) besitzt, wobei sich die genannte Durchgangsausnehmung treppenförmig oder kegelig nach Art eines Senklochs zur Außenseite hin aufweitet.

12. Erntemaschine nach einem der vorhergehenden Ansprüche, wobei das Messereingriffsstück (12) als Rolle ausgebildet und drehbar an der Haltegabel (13) gelagert ist, wobei die Querbolzenverbindung (15) die Drehachse für das Messereingriffsstück (12) bildet.

13. Erntemaschine nach einem der vorhergehenden Ansprüche, wobei die Haltegabel (13) zwei voneinander beabstandete, insbesondere zueinander parallele, Gabelarme (14) aufweist, zwischen denen das Messereingriffsstück (12) aufgenommen und durch die Querbolzenverbindung (15) gelagert ist.

14. Verfahren zum Herstellen einer Erntemaschine, die gemäß einem der vorhergehenden Ansprüche ausgebildet ist, wobei das Messereingriffsstück (12) des Rückhalters (11) an dessen Haltegabel (13) durch eine Bolzenverbindung (15) befestigt wird, **dadurch gekennzeichnet, dass** die Querbolzenverbindung (15) aus einem Querbolzen (17) und einer Bolzenhülse (16) zusammengesetzt wird, die von gegenüberliegenden Seiten her in die Haltegabel (13) und das Messereingriffstück (12) eingesetzt und dabei ineinander geschoben werden, sowie ineinander sitzend montiert in der Haltegabel (13) miteinander verpresst werden.

## Claims

1. Harvesting machine, in particular in the form of a loader wagon or a baler, comprising a cutting unit (7), which comprises a cutter (8) that is arranged on a cutter bar (9) and projects into a conveying channel (4) for the crop in its cutting position, wherein the cutters (8) are mounted to be movable on the cutter bar (9) in order to avoid obstacles and are each retained in the cutting position by a retainer (11), wherein said retainer (11) comprises, in each case, a holding fork (13) and a cutter engagement part (12), which is mounted on the holding fork (13) by a cross bolt connection (15), **characterised in that** the cross bolt connection (15) comprises a cross bolt (17) and a bolt sleeve (16), which are fastened to one another so as to sit inside one another and have enlarged, integrally moulded-on sleeve and bolt heads (20, 22) on opposite ends of the cross bolt connection (15) for axially securing the cross bolt connection (15).

2. Harvesting machine according to the preceding claim, wherein the bolt sleeve (15) forms a collared sleeve having a through-hole, through which the cross bolt (16) is pushed, wherein the cross bolt is compressed by the collared sleeve when pushed through.

3. Harvesting machine according to the preceding claim, wherein the cross bolt (17) comprises a collar-shaped bolt head (22) on one side for resting on the holding fork and/or on the cutter engagement part (12) and comprises a plastically deformed securing head (18) on the other side for resting on the bolt sleeve (16), such that the bolt sleeve (16) is axially secured between the securing head (18) and the bolt head (22) of the cross bolt (17) so as to sit on the cross bolt (17).

4. Harvesting machine according to any of the preceding claims, wherein the bolt sleeve (16) has a compression widening portion (21), which widens and/or enlarges a through-hole passing through the bolt sleeve (16) towards the sleeve head (20), at its end portion, on which the bolt sleeve (16) comprises a collar-shaped sleeve head (20).

5. Harvesting machine according to the preceding claim, wherein the cross bolt (17) with its plastically deformed securing head (18) is widened in said compression widening portion (21) of the bolt sleeve (16) and the securing head (18) is received so as to be countersunk in said compression widening portion (21) at least in part.

6. Harvesting machine according to the preceding claim, wherein the plastically deformed securing head (18) is received in the compression widening portion (21) of the bolt sleeve (16) so as to be countersunk in a flush manner or so as to be countersunk without any excess length.

7. Harvesting machine according to any of the preceding claims, wherein the bolt sleeve (16) on one hand and the cross bolt (17) on the other hand are moulded from materials of different hardnesses and/or have a different surface hardness.

8. Harvesting machine according to the preceding claim, wherein the bolt sleeve (16) is configured to be hardened at least on the outer circumference and has a greater hardness than the cross bolt (16), and said cross bolt (17) is configured to be unhardened.

9. Harvesting machine according to any of the preceding claims, wherein at least one of the sleeve and bolt heads (20, 22) of the bolt sleeve (16) and the cross bolt (17) is mounted in the holding fork (13) of the retainer (11) so as to be countersunk in a flush manner and/or so as to be countersunk without any excess length.

10. Harvesting machine according to the preceding claim, wherein the cross bolt connection (15) is mounted in the holding fork (13) so as to be countersunk without any excess length on either side.

11. Harvesting machine according to any of the preceding claims, wherein the holding fork (13) of the retainer (11) has a through cut-out that enlarges towards an outer side to receive the cross bolt connection (15), wherein said through cut-out widens towards the outer side in a stepped or tapered way, in the manner of a countersunk hole.

12. Harvesting machine according to any of the preceding claims, wherein the cutter engagement part (12) is configured as a roller and is rotatably mounted on the holding fork (13), wherein the cross bolt connection (15) forms the axis of rotation for the cutter engagement part (12).

13. Harvesting machine according to any of the preceding claims, wherein the holding fork (13) comprises two spaced-apart fork arms (14), which are in particular in parallel with one another and between which the cutter engagement part (12) is received and is mounted by the cross bolt connection (15).

14. Method for producing a harvesting machine configured according to any of the preceding claims, wherein the cutter engagement part (12) of the retainer (11) is fastened to its holding fork (13) by a bolt connection (15), **characterised in that** the cross bolt connection (15) is composed of a cross bolt (17) and a bolt sleeve (16), which are inserted into the holding fork (13) and the cutter engagement part (12) from opposite sides and are slid into one another in the process, and are compressed together in the holding fork (13) so as to be mounted to sit inside one another.

## Revendications

1. Moissonneuse, en particulier sous la forme d'une remorque autochargeuse ou d'une presse à balles, comportant un mécanisme de coupe (7) qui comprend des lames (8) disposées sur une barre porte-lames (9), lesquelles, dans leur position de coupe, dépassent dans un canal de transport (4) pour la récolte, les lames (8) étant montées mobiles sur la barre porte-lames (9) pour se déporter en cas d'obstacles et étant chacune retenues dans la position de coupe par un organe de retenue (11), ledit organe de retenue (11) comprenant respectivement une fourche de retenue (13) ainsi qu'une pièce de contact avec la lame (12) qui est montée sur la fourche de retenue (13) par une liaison par boulon transversal (15), **caractérisée en ce que** la liaison par boulon transversal (15) comprend un boulon transversal (17) et un manchon fileté (16) qui sont fixés l'un à l'autre en en étant logés l'un dans l'autre et qui possèdent, sur des extrémités opposées de la liaison par boulon transversal (15), des têtes de manchon et de boulon (20, 22) élargies, formées de manière intégrée d'un seul tenant pour le blocage axial de la liaison par boulon transversal (15).

2. Moissonneuse selon la revendication précédente, dans laquelle le manchon fileté (15) forme un manchon à collerette avec trou traversant dans lequel est inséré le boulon transversal (16), le boulon transversal, dans l'état inséré, étant comprimé avec le manchon à collerette.

3. Moissonneuse selon la revendication précédente, dans laquelle le boulon transversal (17) présente d'une part une tête de boulon (22) en forme de collerette destinée à reposer sur la fourche de retenue et/ou sur la pièce de contact avec la lame (12) et d'autre part une tête de blocage (18) déformée plastiquement destinée à reposer sur le manchon fileté (16), de telle sorte que le manchon fileté (16) est bloqué axialement en étant logé sur le boulon transversal (17) entre la tête de fixation (18) et la tête de boulon (22) du boulon transversal (17).

4. Moissonneuse selon l'une des revendications précédentes, dans laquelle le manchon fileté (16) possède, sur sa partie d'extrémité sur laquelle le manchon fileté (16) présente une tête de manchon (20) en forme de collerette, un évasement de compression (21) qui évase et/ou élargit un trou traversant passant à travers le manchon fileté (16) en direction de la tête de manchon (20).

5. Moissonneuse selon la revendication précédente, dans laquelle le boulon transversal (17) s'évase avec sa tête de blocage (18) déformée plastiquement dans ledit évasement de compression (21) du manchon fileté (16) et la tête de blocage (18) est reçue au moins en partie dans ledit évasement de compression (21) de manière enfoncée.

6. Moissonneuse selon la revendication précédente, dans laquelle la tête de blocage (18) déformée plastiquement est reçue dans l'évasement de compression (21) du manchon fileté (16) de manière enfoncée à fleur ou de manière enfoncée sans saillie.

7. Moissonneuse selon l'une des revendications précédentes, dans laquelle le manchon fileté (16) d'une part et le boulon transversal (17) d'autre part sont formés à partir de matériaux de dureté différente et/ou possèdent une dureté de surface différente.

8. Moissonneuse selon la revendication précédente, dans laquelle le manchon fileté (16) est réalisé durci au moins sur le côté circonférence extérieure et possède une dureté supérieure à celle du boulon transversal (16) et ledit boulon transversal (17) est réalisé non durci.

9. Moissonneuse selon l'une des revendications précédentes, dans laquelle au moins une des têtes de manchon et de boulon (20, 22) du manchon fileté (16) et du boulon transversal (17) est montée de manière enfoncée à fleur et/ou enfoncée sans saillie dans la fourche de retenue (13) de l'organe de retenue (11).

10. Moissonneuse selon la revendication précédente, dans laquelle la liaison par boulon transversal (15) est montée des deux côtés de manière enfoncée sans saillie dans la fourche de retenue (13).

11. Moissonneuse selon l'une des revendications précédentes, dans laquelle la fourche de retenue (13) de l'organe de retenue (11) possède un évidement de passage s'élargissant vers un côté extérieur pour recevoir la liaison par boulon transversal (15), ledit évidement de passage s'évasant en forme d'escalier ou en forme de cône vers le côté extérieur à la manière d'une noyure.

12. Moissonneuse selon l'une des revendications précédentes, dans laquelle la pièce de contact avec la lame (12) est réalisée sous la forme d'un rouleau et est montée rotative sur la fourche de retenue (13), la liaison par boulon transversal (15) formant l'axe de rotation pour la pièce de contact avec la lame (12).

13. Moissonneuse selon l'une des revendications précédentes, dans laquelle la fourche de retenue (13) présente deux bras de fourche (14) espacés l'un de l'autre, en particulier parallèles l'un à l'autre, entre lesquels la pièce de contact avec la lame (12) est reçue et montée par la liaison par boulon transversal (15).

14. Procédé de fabrication d'une moissonneuse, qui est réalisée selon l'une des revendications précédentes, dans lequel la pièce de contact avec la lame (12) de l'organe de retenue (11) est fixée sur la fourche de retenue (13) de celui-ci par une liaison par boulon (15), **caractérisé en ce que** la liaison par boulon transversal (15) est composée d'un boulon transversal (17) et d'un manchon fileté (16), qui sont insérés depuis des côtés opposés dans la fourche de retenue (13) et la pièce de contact avec la lame (12) et sont ainsi coulissés l'un dans l'autre, et sont comprimés l'un avec l'autre, montés en étant logés l'un dans l'autre, dans la fourche de retenue (13).
